(19) Europäisches Patentamt
European Patent Office
Office européen des brevets

(11) EP 3 546 056 A1

(12) EUROPEAN PATENT APPLICATION

(43) Date of publication:
02.10.2019 Bulletin 2019/40

(51) Int Cl.:
B01D 53/86 (2006.01)

(21) Application number: 18165296.7

(22) Date of filing: 30.03.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Koninklijke Philips N.V.
5656 AE Eindhoven (NL)

(72) Inventors:
• Ronda, Cornelis Reinder
5656 AE Eindhoven (NL)
• Koerber, Achim Gerhard Rolf
5656 AE Eindhoven (NL)
• Beckers, Lucas Johannes Anna Maria
5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) **GAS FILTER SYSTEM COMPRISING REGENERABLE FORMALDEHYDE DECOMPOSITION CATALYST**

(57) The invention provides a gas filter system (100) comprising (i) a formaldehyde decomposition catalyst (10) and a support structure (210) for the formaldehyde decomposition catalyst (10), and (ii) a control system (300) configured to control the temperature of the formaldehyde decomposition catalyst (10), wherein the control system (300) includes an operation mode including: (a) a decomposition stage, wherein the temperature of the formaldehyde decomposition catalyst (10) is on average at maximum 60 °C, and (b) a regeneration stage, wherein the temperature of the formaldehyde decomposition catalyst (10) is temporarily raised to a first temperature during a first heating time, wherein the first temperature is on average at least 100 °C, and wherein the first heating time is selected from the range of 5-120 minutes.

FIG. 2

## Description

### FIELD OF THE INVENTION

The invention relates to a gas filter system for removal of formaldehyde from a gas, especially from air. The invention further relates to a process for removing formaldehyde from a gas, especially from air.

### BACKGROUND OF THE INVENTION

Systems for removing formaldehyde from air are known in the art. DE3929521, for instance, describes a catalyst, consisting of a metal wire or strip surface coated with an oxidizing catalyst material. The coating preferably consists of metal and/or metal oxide, formed as a thin film by vapour deposition, electrochemical deposition, dipping in a solution, gel or suspension of metal salt(s) or applying the metal salt(s), followed by drying and activation. An air cleaning process involves direct heating of the catalyst by applying a voltage to achieve the requisite catalyst surface temperature for catalytic combustion of components in the air. The catalyst surface temperature is 200-600 °C.

### SUMMARY OF THE INVENTION

Formaldehyde is a small molecule that may accumulate in indoor air via its release from a variety of sources. Among others, formaldehyde may be released from building materials such as from various particle boards, resins and glues, as well as during combustion processes, including cooking, smoking, and heating processes.

The guidelines of the World Health Organization (WHO) indicate an exposure to a maximum average concentration of 0.1 mg/m$^3$ of formaldehyde for a time period of 30 minutes to prevent sensory irritation as well as adverse effects on lung function and other long-term health effects including nasopharyngeal cancer and myeloid leukemia. The International Agency for Research on Cancer (IARC) classifies formaldehyde as a group 1 carcinogen.

Formaldehyde air pollution may be a significant challenge; especially in China. Formaldehyde may originate among others from glue used in furniture manufacturing and may especially be released in summer in China when the temperature and the relative humidity may be high.

Formaldehyde may be adsorbed by filters containing activated carbon (AC) treated with chemicals that remove formaldehyde, however, this treatment with chemicals may reduce the overall absorption capacity for Volatile Organic Compounds (VOCs). In addition, the use of these kinds of filters may lead to a continuous waste stream consisting of filters that have reached their end-of-life.

Formaldehyde may be adsorbed by filters impregnated with inorganic or organic salts, however, because these salts are hygroscopic, the impregnant may drip off the filter if the relative humidity becomes too high (>95%) and the adsorption of formaldehyde may be reversible, *i.e.* a used impregnated filter may release small amounts of formaldehyde if fed by clean air.

Formaldehyde decomposition catalysts may effectively remove formaldehyde from air. However, current systems using a formaldehyde decomposition catalyst may suffer from one or more of the following drawbacks: (i) an incomplete decomposition of formaldehyde or precipitation of other (organic) compounds on the surface of the catalyst may decrease the decomposition dramatically; this effect may be especially prevalent in smokers' households; (ii) the systems may be configured to operate at substantially elevated temperatures, which may result in increased energy costs and an increased carbon footprint, as well as in a potentially undesired increase of the ambient temperature (in a space wherein such systems are applied).

Hence, it is an aspect of the invention to provide an alternative system for removing formaldehyde from air, which preferably further at least partly obviates one or more of above-described drawbacks. The present invention may have as object to overcome or ameliorate at least one of the disadvantages of the prior art, or to provide a useful alternative.

It was surprisingly observed that heating the formaldehyde decomposition catalyst at slightly elevated temperatures during relatively short times (such as e.g. T≥100, like T≥ 150 °C; 30 minutes) may essentially restore the formaldehyde decomposition efficiency of the catalyst, even when the catalyst may be exposed to the smoke of more than 100 cigarettes.

Hence, the invention may solve aforementioned problems. The AC may no longer need to be used to adsorb formaldehyde. In this way, amongst others the invention may result in AC filters with maximum VOC adsorption capacity (the AC is not treated with the chemical that leads to formaldehyde adsorption). Formaldehyde may instead be decomposed by the formaldehyde decomposition catalyst, and any incomplete decomposition that would result in precipitates on the catalyst surface that may reduce the formaldehyde decomposition efficacy may be removed by mild heating during a limited time (such as e.g. T ≥ 100 °C, such as ≥150 °C; 30 minutes). The decomposition process *per se* may further operate at ambient or only slightly elevated temperatures such that overall, the combination of the decomposition process and a regeneration process of the catalyst may be more energy efficient, cheaper, and more convenient for the users, as less heat is produced.

An aspect of the invention may be a formaldehyde decomposition catalyst that may be integrated in or on a structure such that the formaldehyde decomposition catalyst can be heated to a temperature of e.g. at least 100 °C, such as at least 150 °C. Finally, the heating may also be done in an oven. A further aspect may be a gas filter, which may comprise a support structure, especially a ceramic support structure, wherein a formaldehyde decomposition catalyst may be precipitated onto the support structure, especially on side walls of channels in the support structure. The support structure may have embedded metal wires with which the support structure and the formaldehyde decomposition catalyst may be heated to elevated temperatures (T ≥ 100 °C, such as at least 150 °C). A further aspect may be a gas filter system containing such gas filter, with hard- and software with which the support structure supporting the formaldehyde decomposition catalyst (for example a ceramic structure with integrated heat wires) can be heated at a needed temperature during a heating time, and with which the gas filter system be controlled. The gas filter system may be (digitally) connected to a (formaldehyde) sensor and may include software to estimate a formaldehyde decomposition speed. In this way, the gas filter system may monitor the gas filter system performance with respect to formaldehyde decomposition and in this way may further monitor the need for regeneration of the formaldehyde decomposition catalyst.

Hence, in a first aspect the invention provides a gas filter system ("system") comprising (i) a formaldehyde decomposition catalyst ("catalyst") and a support structure ("support") for the formaldehyde decomposition catalyst, and (ii) a control system ("controller") configured to control the temperature of the formaldehyde decomposition catalyst, wherein the control system includes an operation mode including: (a) a decomposition stage, wherein the temperature of the formaldehyde decomposition catalyst is on average at a threshold temperature, such as on average at maximum 60 °C, and a regeneration stage, wherein the temperature of the formaldehyde decomposition catalyst is temporarily raised to a first temperature ("regeneration temperature") during a first heating time ("regeneration heating time"), wherein the first temperature is on average at least 100 °C, and wherein the first heating time is selected from the range of 5-120 minutes.

This invention enables the continuous removal of formaldehyde from gas ("air") without the need for gas filter replacements while minimizing energy expenditure and heating. The decomposition stage takes place at ambient or slightly elevated temperatures. During this stage, the gas filter system removes formaldehyde from air through contact of the air with the surface of the formaldehyde decomposition catalyst. However, during operation, various materials, such as e.g. small particles present in air, for example originating from smoke, may precipitate on the surface of the formaldehyde decomposition catalyst, thereby partially blocking it off from air and inhibiting the decomposition of formaldehyde. Hence, the gas filter system has a regeneration stage, wherein the temperature of the formaldehyde decomposition stage is raised moderately for a short period of time such that the surface of the formaldehyde decomposition catalyst is cleaned of the precipitated particles, thereby restoring the performance of the gas filter system.

Embodiments of the invention may be particularly suitable in conditions wherein formaldehyde concentrations are (periodically) high, or wherein formaldehyde is continuously released.

The gas filter system as defined herein comprises a regenerable gas filter. Hence, the gas filter system may require fewer - or no - gas filter replacements, which may result in: an increased ease of use; reduced costs; and less waste material.

Gas filter systems are a type of air purifier; a class of devices that remove various contaminants from air. The contaminants may comprise VOCs, especially formaldehyde. Gas filter systems, specifically, are air purifiers that use a gas filter to clean the air that passes through.

Gas filters may provide one or more mechanisms for cleaning the air that passes through: a size-exclusion gas filter may physically capture contaminants based on their size (this may be based on different mechanisms, as is the case in HEPA filters); an adsorbing gas filter may adsorb contaminants, especially adsorbing gas filters comprising one or more of activated carbon or an impregnant composition may adsorb volatile chemicals; a catalytic gas filter may decompose contaminants through the use of a catalyst. Hence, a gas filter comprises one or more of a size-exclusion gas filter, an adsorbing gas filter, and a catalytic gas filter.

The gas filter system according to the invention comprises one or more gas filters. The one or more gas filters may provide different mechanisms for cleaning air. Especially, the one or more gas filters may provide the same mechanism for cleaning air. The gas filter system comprises at least one gas filter comprising a catalytic gas filter. The catalytic gas filter especially comprises at least the support structure and the formaldehyde decomposition catalyst.

The gas filter may have a rectangular shape. The catalytic gas filter may have a height, a width, and a depth, wherein the depth is defined along the channels, *i.e.,* wherein the depth is defined along an air flow direction. In embodiments, the height and the width may differ, especially they may be identical. The filters may be very small, for example for use in personal protection masks ("masks"). Alternatively, the filters may be very large, for example for industrial applications).

The support structure provides the structure of the catalytic gas filter. The support structure may have a plurality of channels for air to pass through. The support structure may have multiple layers, wherein each layer may have a plurality of channels for air to pass through. Especially, the support structure may have a beehive shape, more especially the support structure may have multiple layers, wherein each layer has a beehive shape.

The support structure may comprise one or more materials. Especially, the support structure may comprise one or more ceramic materials. More especially, the support structure may comprise alumina.

The formaldehyde decomposition catalyst catalyzes the decomposition of ("decomposes") formaldehyde. Especially, the surface of the formaldehyde decomposition catalyst decomposes formaldehyde in contacted air. The formaldehyde decomposition catalyst may decompose formaldehyde (already) in temperatures ranging from 0 °C to 50 °C. For instance, the formaldehyde decomposition catalyst may be applied at temperatures ranging from especially 10 °C to 40 °C. In embodiments, the formaldehyde decomposition catalyst may be applied at ambient temperatures for decomposing formaldehyde.

Herein, the term "decomposition of formaldehyde" and similar terms may refer to the decomposition of a part of the total number of formaldehyde molecules in a gas, especially air.

In exemplary embodiments, the formaldehyde decomposition catalyst may comprise $CeO_2$ nanoparticles supported by a manganese oxide structure.

The formaldehyde decomposition catalyst may be provided as a layer or multilayer on the support structure, especially on side walls of channels in the support structure. The formaldehyde decomposition catalyst may especially be a coating on the support structure, for example applied via precipitation.

The formaldehyde decomposition catalyst may include a nanostructure. The nanostructure may result in an increased surface area of the formaldehyde decomposition catalyst. The formaldehyde decomposition catalyst may comprise one or more compounds to provide the nanostructure, especially, the formaldehyde decomposition catalyst may comprise cerium oxide (especially $CeO_2$). A particularly well suited formaldehyde decomposition catalyst is Ce exchanged cryptomelane.

The gas filter system may further comprise a gas filter apparatus. The gas filter apparatus may comprise the gas filter and a gas filter receiver for the gas filter. Hence, the gas filter apparatus may comprise the formaldehyde decomposition catalyst and the support structure for the formaldehyde decomposition catalyst. The gas filter receiver may be configured such that the gas filter can be removed and replaced. Especially, a gas filter may be removed, cleaned externally, and then re-inserted into the gas filter housing. The gas filter receiver may be configured such that an inserted gas filter is held perpendicular to an air flow direction, i.e., channels of the gas filter run (essentially) parallel to the air flow direction. Hence, the gas filter may be configured as cartridge. The gas filter system, especially the gas filter apparatus, may include a gas filter receiver configured to receive and host the gas filter configured as cartridge. The gas filter may thus be configured removable from the gas filter receiver.

In embodiments, the regeneration stage may involve (manual) removal of the gas filter from the gas filter system, especially (manual) removal from the gas filter apparatus, more especially (manual) removal from the gas filter receiver. In such embodiments, the gas filter may be heated external from the gas filter system. For example, the control system may provide a signal that the gas filter is to be regenerated. A person may then open the gas filter system, remove the gas filter, place the gas filter in an external heating unit to heat the gas filter to the first heating temperature for the first heating time, after which the gas filter is to be re-inserted in the gas filter system. The external heating unit may comprise an oven, or also a dedicated unit. In general, however, embodiments of the gas filter system as described herein will comprise or be functionally coupled to a heating element.

The gas filter system may further comprise or be functionally coupled to a heating element. The heating element may be functionally coupled to the control system. The heating element is especially configured to heat the formaldehyde decomposition catalyst. The heating element may be at least partially embedded within the support structure, such as fully embedded in the support structure. Alternatively or additionally, the heating element may be arranged in the channels of the support structure. Yet alternatively or additionally, the heating element may provide heated air to the formaldehyde decomposition catalyst, such as a hot air fan. Yet alternatively or additionally, the support structure may be configured as (part of) the heating element, for example, the support structure may comprise one or more of an electrically and/or a thermally conductive material. Hence, the support structure may conduct electricity and produce heat while conducing electricity and/or the support structure may conduct heat. In embodiments, the heating element may comprise a gas heater. Alternatively or additionally, the heating element may include an IR radiator, especially an IR radiator based on incandescent lamps, preferably halogen lamps. In general, the gas filter system comprises a heating element. The term "heating element" may also refer to a plurality of (different) heating elements. Hence, the gas filter system may comprise or be functionally coupled to a plurality of heating elements.

The heating element is especially used to heat the formaldehyde decomposition catalyst to a first temperature of at least 100 °C. In specific embodiments, the heating element is configured to heat the formaldehyde decomposition catalyst to a first temperature of at least 100 °C. In preferred embodiments, the heating element comprises an electric heating element, especially an electric resistance heating wire ("heating wire"). The heating wire may include one or more structures, including structures from the group of coils, straight ribbons, corrugated ribbons, and strips. In specific embodiments, the formaldehyde decomposition catalyst may be (additionally) arranged on a heating element, especially on heating wires.

The heating wire may comprise one or more materials, especially, the heating wire may comprise one or more of nichrome, kanthal, and cupronickel. The heating wire may be embedded in a ceramic material, especially fully embedded in a ceramic material.

The gas filter system may further comprise or be functionally coupled to an air flow device. The air flow device may be configured to provide an air flow, especially an air flow through the gas filter system, more especially an air flow through the gas filter apparatus, yet more especially an air flow through the gas filter. The air flow device may be configured to provide an air flow through blowing air. Alternatively or additionally, the air flow device may be configured to provide an air flow through blowing air. The air flow device may be configured to contact air from external of the gas filter apparatus with the formaldehyde decomposition catalyst and to remove air that has been contacted with the formaldehyde decomposition catalyst from the gas filter apparatus. The term "air flow device" may also refer to a plurality of (different) air flow devices. Hence, the gas filter system may comprise or be functionally coupled to a plurality of air flow devices.

The air flow device may comprise a fan. Especially, the air flow device may comprise a ventilation system. In embodiments, the gas filter system may comprise an air flow device comprising a fan. In further or alternative embodiments, the gas filter system may be functionally coupled to a ventilation system. In yet further or alternative embodiments, the gas filter system may be functionally coupled to an air conditioning system.

In embodiments wherein the gas filter system comprises an air flow device, the air flow device may be arranged upstream or downstream from the gas filter apparatus. An upstream arrangement of the air flow device to the gas filter apparatus may be advantageous as the heating of the catalytic decomposition catalyst in the gas filter apparatus will have a lower effect on the temperature of the air flow device. Alternatively, a downstream arrangement of the air flow device to the gas filter apparatus may be advantageous as the air flow through the air flow system may be cleaner.

The air flow device may provide a superficial gas velocity u through the gas filter system up to about 2 m/s, such as at least 0.02 m/s.. Hence, the air flow device may provide an air flow $\Phi$ through the gas filter, as the air flow $\Phi = A_f*u$, wherein $A_f$ is the filter surface.

The efficient and cheap operation of the gas filter system as described herein may benefit from a functional coupling to other devices. For example, the gas filter system may be functionally coupled to an existing smoke detector such that the gas filter system may acquire air quality information from the smoke detector. Hereby, the gas filter system may be cheaper as it does not need to comprise a smoke sensor. Similarly, the gas filter system may be functionally coupled to one or more other gas sensors, such as including those in ventilation systems, in air conditioning systems, in smoke detectors, in smartphones, etc.. Similarly, an existing oven may be used to regenerate the catalytic gas filter. Similarly, an existing air flow device may be functionally coupled to the gas filter system to provide an air flow through the catalytic gas filter.

The gas filter system may further comprise or be functionally coupled to a sensor, *i.e.,* the gas filter system further comprises a sensor and/or the gas filter system is functionally coupled to a sensor. The sensor may be configured to retrieve air quality information (especially from air external of the gas filter system). Especially, the sensor may be configured to measure one or more air parameters, especially one or more air parameters selected from the group of particle concentration, temperature, humidity, and formaldehyde air concentration, *i.e.,* the air quality information may comprise one or more of particle concentration information, temperature information, humidity information and formaldehyde air concentration information. Alternatively or additionally, the air quality information may comprise information in relation to one or more air parameters selected from the group of particle concentration, temperature, and humidity. The term "sensor" may also refer to a plurality of (different (types of)) sensors. Hence, the gas filter system may comprise or be functionally coupled to a plurality of sensors.

In embodiments, the gas filter system comprises one or more sensors. Especially, the gas filter system may comprise an upstream sensor arranged upstream of the catalytic gas filter, such as upstream of the gas filter apparatus. The upstream sensor may be configured to sense air prior to having been contacted with the formaldehyde decomposition catalyst. Alternatively or additionally, the gas filter system may comprise a downstream sensor arranged downstream of the catalytic gas filter, such as downstream of the gas filter apparatus. The downstream sensor may be configured to sense air after having been contacted with the formaldehyde decomposition catalyst. The upstream sensor and/or the downstream sensor may especially be configured to sense a formaldehyde air concentration.

In further or alternative embodiments, the gas filter system is functionally coupled to (such) one or more remote sensors. These remote sensors may be dedicated remote sensors for the gas filter system. Especially, these remote sensors are not dedicated remote sensors for the gas filter system. Instead, these sensors are devices in common use that may provide the gas filter system with (additional) air quality information. For example, the gas filter system may be functionally coupled to one or more devices comprising a (gas) sensor, such as a smoke detector, an air flow device, a humidity sensor, or another air purifier, etc.. In embodiments, the gas filter system may be functionally coupled to a cell phone including one or more of such sensors.

Alternatively or additionally, the gas filter system may be configured to receive information on weather conditions, especially on current weather conditions, more especially on forecasted weather conditions. The weather conditions may comprise one or more of temperature, smog levels, outdoor formaldehyde concentrations, pressure, relative humidity, and precipitation conditions. Hence, the gas filter system may include a communication device for communicating with the internet, especially for receiving information from the internet, and/or a communication device for receiving information via other wireless communication channels, such as radio. Alternatively or additionally, the gas filter system may be configured to receive information from the internet via one or more functionally coupled devices, especially via one or more of a sensor, a sensor system, a cell phone, a radio, and a personal computer.

The gas filter system may further comprise a housing. The housing may provide a solid framework for one or more of the gas filter apparatus, the gas filter, the air flow device, the heating element, the sensor, and the control system. Especially, the housing may provide a solid framework for all elements of the gas filter system, excluding any that are specifically external such as an external sensor or a control system interface. Especially, the housing includes an inlet/outlet configuration for entrance of air to be purified and removal of purified air. This can be a single opening. However, especially the housing provides a flow through channel which is in functional contact with the catalyst. The catalyst is configured such that in operation, the catalyst is downstream from the inlet and upstream from the outlet. The terms "inlet" and "outlet" may each individually also refer to a plurality of (different) inlets and a plurality of (different) outlets, respectively.

The control system is configured to control the gas filter system. Hence, in embodiments wherein the gas filter system comprises or is functionally coupled to a heating element, the control system may be configured to operate the heating element. Similarly, the control system may be configured to control the air flow device. Similarly, the control system may be configured to receive a sensor signal of the sensor. The control system may comprise a processor.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems.

The control system may be functionally coupled to a user interface, such as a graphical user interface. The user interface is herein also indicated as "control system interface" or "interface". The control system interface may be comprised by the gas filter device but may also be configured external thereof. The control system interface may in embodiments be provided by an App on a digital device such as a smartphone, tablet, etc..

The control system includes one or more operation modes (of the gas filter system), wherein at least one operation mode includes a decomposition stage and a regeneration stage. Especially, one operation mode includes an alternation of decomposition stages and regeneration stages, more especially with a (time) interval between two consecutive regeneration stages, in specific embodiments selected from the range of 2-240 hours, such as 4-120 hours, especially 12-48 hours. In general, during at least part of the time of the (time) interval between two consecutive regeneration stages a decomposition stage may take place. Such decomposition stage may take place during essentially the entire (time) interval, or during part of time which the time interval lasts.

As indicated herein, the system or device or apparatus may execute an action in a "mode" or "operation mode" or "mode of operation". The term "mode" may also be indicated as "controlling mode". This does not exclude that the system may also be adapted for providing another controlling mode, or a plurality of other controlling modes. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system that can only operate in a single operation mode (i.e. "on", without further tenability).

The decomposition stage may be the default stage of the gas filter system. In the decomposition stage, the temperature of the formaldehyde decomposition catalyst is on average at a threshold temperature, *i.e.,* over the course of the decomposition stage the average temperature does not exceed the threshold temperature, wherein the threshold temperature may be selected from the range of 45-75 °C, such as on average at maximum 60 °C. The temperature of the formaldehyde decomposition catalyst in the decomposition stage may be set such that the formaldehyde decomposition catalyst can decompose formaldehyde. Hence, the temperature of the formaldehyde decomposition catalyst may differ from the ambient temperature. Especially, the temperature of the formaldehyde decomposition catalyst may be lower or higher than the ambient temperature. More especially, the temperature of the formaldehyde decomposition catalyst may be in the range of $T_a$-20 to $T_a$+20, wherein $T_a$ is the ambient temperature, such as in the range of $T_a$-

10 to $T_a$+15, especially in the range of $T_a$ to $T_a$+20, like $T_a$ to $T_a$+10.

In specific embodiments, the control system may (also) control the temperature of the formaldehyde decomposition catalyst in the decomposition stage. For example, the control system may control the heating element such that the temperature of the formaldehyde decomposition catalyst is increased relative to the ambient temperature. Alternatively, the control system may control a cooling element such that the temperature of the formaldehyde decomposition catalyst is reduced relative to the ambient temperature. In general, however, the temperature of the formaldehyde decomposition catalyst in the decomposition stage approximately equals about the ambient temperature.

Important characteristics of a gas filter for formaldehyde may be the one-pass efficiency $\eta$, the clean air delivery rate (CADR), and the cumulative clean mass (CCM). The one-pass efficiency $\eta$ indicates the percentage of formaldehyde in air that is decomposed upon one passage of the air through the gas filter. The CADR indicates the amount of clean air coming out of the gas filter in an hour. The CCM indicates the cumulative purification of pollutants when the CADR reaches 50% of the original CADR. According to Chinese standard GB/T 18801-2015, formaldehyde gas filters are assigned a level based on their CCM at a relative humidity (RH) of 50±10% and a temperature of 25±2 °C: F1: 300-600 mg; F2: 600-1000 mg; F3: 1000-1500 mg; F4: 1500$^+$ mg. According to these standards, the catalytic gas filters described herein may be assigned an F4-level.

During the decomposition stage, the one-pass efficiency $\eta$ of the gas filter reduces over time. Especially, the surface of the formaldehyde decomposition catalyst may become covered with various precipitates including dust, VOC, deposits from cigarette smoke (including tar), and water droplets, wherein the precipitates may inhibit the functioning of the formaldehyde decomposition catalyst and result in a reduced one-pass efficiency $\eta$.

The regeneration stage serves to regenerate the gas filter such that the reduced one-pass efficiency $\eta$ increases again. The one-pass efficiency $\eta$ after the regeneration stage may be between about 50% and 120% of the one-pass efficiency $\eta$ of a new gas filter, especially between 60% and 100%, such as between 70% and 95%. In general, a regenerated gas filter may have a lower one-pass efficiency $\eta$ than a new gas filter; however, it has been observed that a regenerated gas filter can outperform a new gas filter.

The regeneration stage includes a heating of the formaldehyde decomposition catalyst to a first temperature for a first heating time, wherein the first temperature is at least 100 °C, and wherein the first heating time is selected from the range of 2-240 minutes, such as from the range of 5-120 minutes. The first temperature may cause the removal of the various precipitates accumulated during the decomposition stage. Hence, the regeneration stage may result in the uncovering of the formaldehyde decomposition catalyst, which may result in an increased one-pass efficiency $\eta$.

The first heating temperature is at least 100 °C, such as at least 125 °C, especially at least 150 °C, such as at least 200 °C. In general, a relatively low first heating temperature such as 100 °C is preferred to minimize heating costs and to minimize an increase of the ambient temperature. However, an increased first heating temperature of at least 150 °C, such as at least 200 °C, may be required for optimal regeneration of the gas filter.

The first heating time is selected from the range of 2-240 minutes, such as 5-120 minutes, especially from the range of 15-100 minutes, such as 30-90 minutes. In general, a relatively short first heating time such as a first heating time selected from the range of 5-30 minutes is preferred to minimize heating costs and to minimize an increase of the ambient temperature. However, an increased first heating time selected from the range of 25-120 minutes, such as 60-120 minutes, may be required for optimal regeneration of the gas filter.

In general, the gas filter system is in the decomposition stage until the control system starts the regeneration stage, wherein the control system may select and control one or more of the first temperature and the first heating time. The control system may be configured to start the regeneration stage in a regular interval. Alternatively or additionally, the control system may be configured to start the regeneration stage based on one or more criteria. Especially, the gas filter system may be configured to acquire air quality information, and the control system may be configured to control the regeneration stage dependent on the air quality information. In embodiments, the control system may be configured to control one or more of (i) a start of the regeneration stage, (ii) the first heating time, and (iii) the first temperature dependent on the air quality information. In further embodiments, the control system may be configured to control the regeneration stage dependent on information in relation to one or more air parameters. In yet further embodiments, the control system may be configured to control the regeneration stage dependent on formaldehyde air concentration information, such as the sensed formaldehyde air concentration. the regeneration

During the decomposition stage, the control system may continuously evaluate whether a regeneration stage should be started, especially the control system may continuously evaluate whether a regeneration stage should be started dependent on air quality information. Alternatively, the control system may also include operation modes including a decision stage, wherein the control system determines whether to start a regeneration stage or a decomposition stage or yet another stage. The decision stage may be periodical, e.g., every ten minutes while in the decomposition stage the control system may enter the decision stage.

In embodiments wherein the gas filter system comprises or is functionally coupled to an air flow device, the control system may be functionally coupled to the air flow device. Especially, the control system may control the air flow device. More especially, the control system may control the air flow generated by the air flow device, especially during the decomposition stage, and especially during the regeneration stage. The control system may also switch the air flow system off. For example, the control system may reduce the air flow in the decomposition stage if the formaldehyde concentration in the air is low. Alternatively or additionally, the control system may control, such as reduce, the air flow in the decomposition stage dependent on the relative humidity, such as when the relative humidity is high. Yet alternatively or additionally, the control system may reduce the air flow in the regeneration stage to decrease heating energy usage and costs as well as to minimize increasing the ambient temperature. In embodiments, the (external) air flow device may also comprise additional air flow device elements, such as a heater, a cooler, or a sensor. In such embodiments, the control system may also be functionally coupled to the additional air flow device elements. It is clear to a person skilled in the art that control of the air flow system may provide further benefits to the operation of the gas filter system.

In embodiments wherein the gas filter system comprises or is functionally coupled to a sensor, the control system may be functionally coupled to the sensor. The control system may acquire air quality information from the sensor. The control system may also control the sensor. For example, the sensor may be in a "sleeping mode" until the control system activates the sensor to retrieve air quality information, after which the sensor returns to the "sleeping mode". Alternatively or additionally, the sensor may periodically retrieve air quality information which is then acquired by the control system.

In an exemplary embodiment, the gas filter system may comprise a gas filter comprising the formaldehyde decomposition catalyst and the support structure for the formaldehyde decomposition catalyst, wherein the support structure has a honeycomb shape with a plurality of air channels, and wherein the formaldehyde decomposition catalyst is arranged on one or more side walls of one or more air channels, wherein the formaldehyde decomposition catalyst comprises nanostructures, wherein the formaldehyde decomposition catalyst comprises cerium oxide, wherein the first temperature is on average at least 150 °C, and wherein the first heating time is selected from the range of 30-90 minutes.

In a second aspect, the current invention also provides a process for removing formaldehyde from air, the process comprising: executing a decomposition stage, wherein air is contacted with a formaldehyde decomposition catalyst, wherein the temperature of the formaldehyde decomposition catalyst is on average at maximum 60 °C; executing a regeneration stage, wherein the temperature of the formaldehyde decomposition catalyst is temporarily raised to a first temperature during a first heating time, wherein in specific embodiments the first temperature is on average at least 100 °C, and wherein the first heating time is in specific embodiments selected from the range of 5-120 minutes.

The process may be carried out with the herein described gas filter system according to this invention. The process in all its embodiments is, however, not exclusive to the gas filter system according to the invention.

The process may comprise a alternating decomposition stages and regeneration stages, with an interval between two consecutive regeneration stages selected from the range of 2-240 hours, such as 4-120 hours, especially 12-48 hours.

In embodiments, the process further comprises acquiring air quality information, especially air quality information in relation to one or more air parameters selected from the group of particle concentration, temperature, humidity, and formaldehyde air concentration information. In such embodiments, the process yet further comprises controlling the regeneration stage dependent on the air quality information, wherein at least one of (i) a start of the regeneration stage, (ii) the first heating time, and (iii) the first temperature is selected dependent on the air quality information. Air quality information may be acquired, as also indicated above, via: a sensor of the gas filter system, such as an inlet sensor or an outlet sensor or a remote sensor; a functionally coupled device, such as a smoke detector or an air flow system or a cell phone or tablet; a communication device of the gas filter system connected to the internet.

The regeneration stage may further comprise: removing a gas filter comprising the formaldehyde decomposition catalyst from a gas filter system comprising the gas filter; heating the gas filter at the first temperature for the first heating time external from the gas filter system, *i.e.*, executing the regeneration stage external from the gas filter system; and (re-)arranging the gas filter in the gas filter system, especially arranging the gas filter after the regeneration stage in the gas filter system.

In an exemplary embodiment of the process for removing formaldehyde from air, the first temperature is on average at least 150 °C, the first heating time is selected from the range of 30-90 minutes, and during the decomposition stage the temperature of the formaldehyde decomposition catalyst is at ambient temperature.

The terms "upstream" and "downstream" relate to an arrangement of items or features relative to the air flow through the gas filter system, wherein relative to a first position within an air flow to the air inlet of the gas filter system, a second position within the air flow closer to the air inlet is "upstream", and a third position within the air flow further away from the air inlet is "downstream".

The gas filter system may be part of or may be applied in e.g. office gas purification systems, household application systems, personal protection masks, shop gas purification systems, home gas purification systems, industrial gas purification systems, hospital gas purification systems, ventilation systems, or air conditioning systems.

BRIEF DESCRIPTION OF THE DRAWINGS

Embodiments of the invention will now be described, by way of example only, with reference to the accompanying schematic drawings in which corresponding reference symbols indicate corresponding parts, and in which:

> Fig. 1 schematically depicts a gas filter and heating elements.
> Fig. 2 schematically depicts a gas filter system in a room, wherein the gas filter system is functionally coupled to a remote control system interface and a remote sensor.
> Figs. 3A-E show graphs of the evolution of the one-pass efficiency η over time for different use conditions of an exemplary embodiment of the invention.
> Fig. 4 schematically depicts a process for removing formaldehyde from air.
> Fig. 5 schematically depicts a time profile of both the temperature of the formaldehyde decomposition catalyst as well as of the operation of the air flow device.

The schematic drawings are not necessarily to scale.

DETAILED DESCRIPTION OF THE EMBODIMENTS

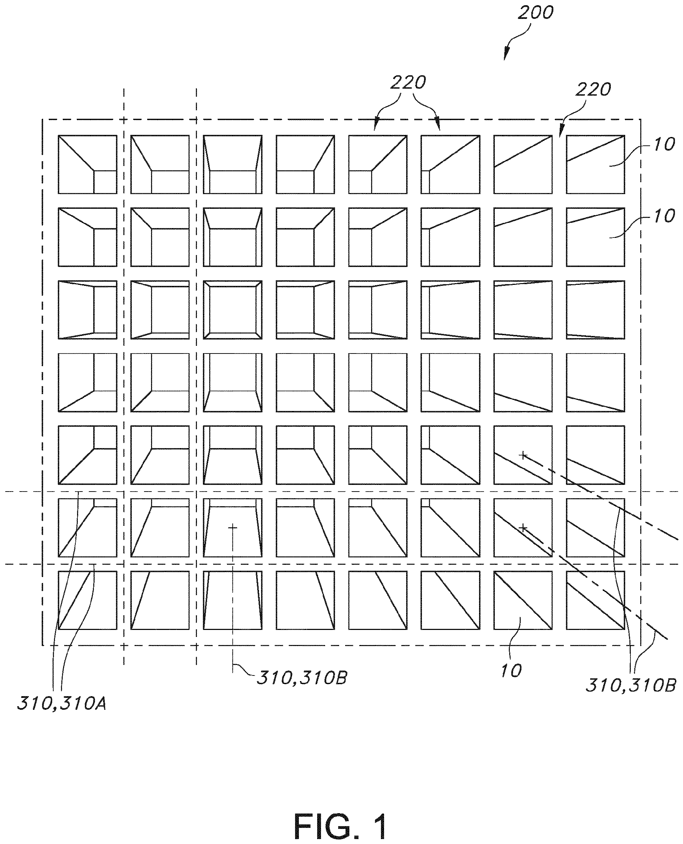

Fig. 1 schematically depicts a gas filter 200 having a support structure 210 for a formaldehyde decomposition catalyst 10. The support structure 210 includes channels 220 for air to pass through. The channels 220 may be regularly arranged, especially the channels 220 may be arranged in a beehive structure. The support structure 210 may thus resemble a grid wherein the grid lines represent the support structure 210 and the grid cells represent the channels 220. The formaldehyde decomposition catalyst 10 is arranged on the support structure 210. Especially, the formaldehyde decomposition catalyst 10 is arranged on side walls of the channels 220. Hence, air that pass through the gas filter 200 may be contacted with the formaldehyde decomposition catalyst 10 in the channels 220. In other embodiments, the support structure 210 may have a different shape, especially the support structure 210 may have an irregular arrangement of channels 220.

Fig. 1 further schematically depicts two embodiments of heating elements 310. In a first embodiment, the heating elements 310, 310A are embedded in the support structure 210. When heating, the heating elements 310, 310A thus heat the formaldehyde decomposition catalyst 10 through heating the support structure 210. If a heating element 310, 310A is embedded in the support structure 210, it is generally embedded throughout the support structure 210, *i.e.*, all grid lines represent the support structure 210 with embedded heating element 310, 310A. In a second embodiment, the heating elements 310, 310B are rod-like elements inserted into the channels 220. When heating, the heating elements 310, 310B thus heat the formaldehyde decomposition catalyst 10 directly. In such an embodiment, generally all channels 220 include an inserted rod-like heating element 310, 310B. In other embodiments, the heating elements 310 may be configured external of the support structure 210.

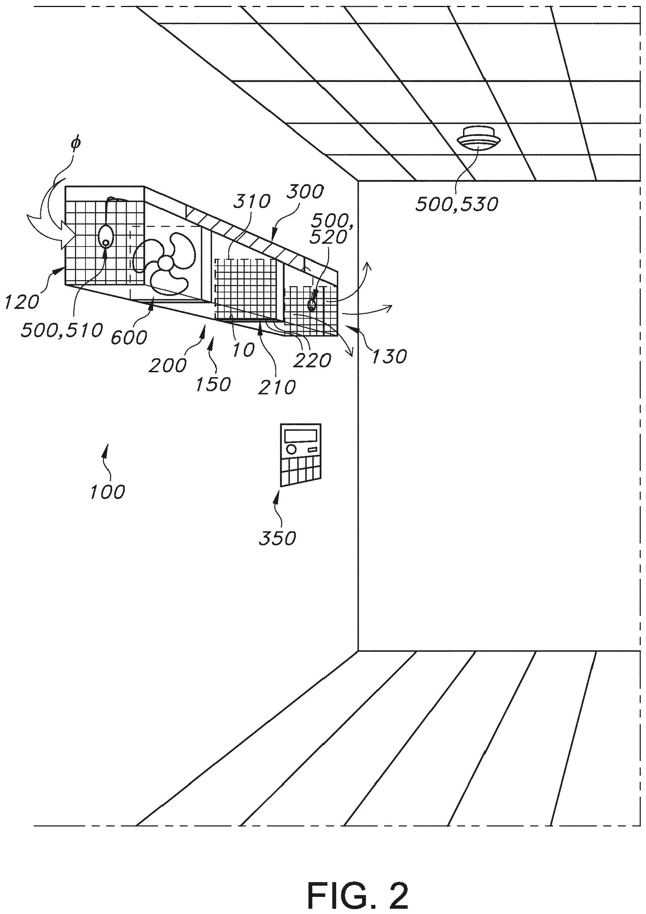

Fig. 2 schematically depicts the gas filter system 100 in a room. The gas filter system 100 is arranged on a wall of the room, but may also be arranged on the ceiling or any other convenient position in the room. For illustrative purposes only, the gas filter system 100 is depicted 'exploded' so that separate parts of the embodiment can be visually distinguished. The gas filter system 100 is depicted having an air flow Φ through the gas filter system 100. The gas filter system 100 comprises an air inlet 120 including an inlet sensor 500, 510, a downstream air flow device 600, a further downstream gas filter apparatus 150, and a yet further downstream air outlet 130 including an air outlet sensor 500, 520. In other embodiments, the order of the air flow device 600 and the gas filter apparatus 150 may be switched; the air flow device 600 may be arranged downstream of the gas filter apparatus 150. The gas filter apparatus 150 comprises a gas filter housing and a gas filter 200. The gas filter 200 comprises the formaldehyde decomposition catalyst 10 and the support structure 210 for the formaldehyde decomposition catalyst 10, wherein the formaldehyde decomposition catalyst 10 is at least arranged on side walls of channels 220 in the support structure 210. The support structure 210 further has an embedded heating element 310. The gas filter system 100 further comprises a control system 300. The control system is functionally coupled to the air inlet sensor 500, 510; to the air outlet sensor 500, 520; to a remote air sensor 500, 530; to the air flow device 600; to the heating element 310; and to a control system interface 350. The control system 300 may have a wireless connection to the remote sensor 500, 530. The control system may further control one or more of the sensors 500, 510, 520, 530; the air flow device 600; and the heating element 310.

Several possible modes of operation will here be discussed for the gas filter system 100 based on the embodiment as depicted in fig. 2. These modes of operation are not limiting. Further, these modes of operation are not restricted to the gas filter system 100 as depicted in fig. 2. It will be clear to one skilled in the art how these modes of operation can be applied to other embodiments of the gas filter system as described herein as well as to other gas filter systems.

The gas filter system 100 may be operated through the control system interface 350. Specifically, a person may use the control system interface 350 to directly adjust, for example, the air flow of the air flow device 600 or the heating temperature of the heating element 310. In general, however, the person may use the control system interface 350 to select a mode of operation for the gas filter system 100. For example, the control system 300 may include a plurality of operation modes, wherein in at least some of the operation modes the air flow device 600 is not active. A person may occasionally select such a mode for a particularly silent operation of the gas filter system 100. The control system interface 350 may further provide the person with operation information on the gas filter system 100. The operation information may comprise air quality information and usage statistics.

The control system 300 includes one or more operation modes including a decomposition stage and a regeneration stage.

The control system 300 may include an operation modes including an alternation of decomposition stages and regeneration stages, with an interval between two consecutive regeneration stages selected from the range of 2-240 hours. The regeneration stage comprises heating the formaldehyde decomposition catalyst 10 to a first temperature for a first heating time, wherein the first temperature is at least 100 °C, and wherein the first heating time is selected from the range of 2-240 minutes, e.g. 5-120 minutes. The regeneration stage may further comprise a deactivation of the air flow device 600 to prevent the air flow from simultaneously cooling the formaldehyde decomposition catalyst 10 while the heating element 310 heats the formaldehyde decomposition catalyst 10. Alternatively, the air flow device 600 may remain active during the regeneration stage as the formaldehyde decomposition catalyst 10 may continue to decompose formaldehyde in air during the regeneration stage.

The control system 300 may include an operation mode wherein the gas filter system 100 is in the decomposition stage by default, and wherein the control system 300 may start the regeneration stage based on air quality information.

For example, the air outlet sensor 500, 520 retrieves air quality information, wherein the air quality information comprises formaldehyde air concentration information. The control system 300 acquires the air quality information from the air outlet sensor 500, 520 and processes the air quality information to estimate a formaldehyde decomposition speed. Dependent on the estimated formaldehyde decomposition speed, the control system 300 may decide to start the regeneration stage. Preferably, in such operation mode, the control system 300 acquires air quality information from a sensor 500 upstream of the gas filter 200 as well as from a sensor 500 downstream from the gas filter 200, such as from the air inlet sensor 500, 510 and the air outlet sensor 500, 520. Alternatively, the formaldehyde air concentration information may indicate that the formaldehyde concentration is well below a formaldehyde air concentration threshold. In such a scenario, the control system 300 may, for example, decide to deactivate the air flow device 600 as there is no need for active decomposition of formaldehyde.

In a second example, the control system 300 further acquires air quality information from the remote sensor 500, 530, wherein the remote sensor 500, 530, comprises a smoke detector. The remote sensor 500, 530 retrieves air quality information comprising particle concentrations, wherein the particle concentrations may, for example, be elevated due to smog, cooking, and/or smoking. Such elevated particle concentrations may result in precipitates on the formaldehyde decomposition catalyst 10 that are especially tough to remove. Hence, the control system 300 may decide to start a regeneration stage with an increased regeneration temperature and regeneration time. For example the regeneration temperature may be at least 150 °C, such as at least 200 °C, and the regeneration time may be selected from the range of 30-120 minutes, such as 60-120 minutes.

In a third example, the control system 300 further acquires air quality information from the remote sensor 500, 530, wherein the remote sensor 500, 530, comprises a humidity sensor. The remote sensor 500, 530 retrieves air quality information comprising a relative humidity, wherein the relative humidity may, for example, be affected by the temperature, weather conditions, and various common household activities. An elevated humidity may result in the formation of water droplets on the formaldehyde decomposition catalyst 10, which are especially easy to remove. Hence, the control system 300 may start relatively short regeneration stages with a relatively short interval in between successive regeneration stages. For example, the regeneration temperature may be 100 °C and the regeneration time may be selected from the range of 5-20 minutes, such as from the range of 5-10 minutes.

In a fourth example, the control system 300 is configured to compare an expected result of the regeneration stage to an observed result. For example, the control system 300 acquires air quality information and estimates a formaldehyde decomposition speed. Due to a low estimated formaldehyde decomposition speed the control system 300 starts a regeneration stage. Following the regeneration stage, the control system 300 acquires new air quality information and estimates the updated formaldehyde decomposition speed. The updated formaldehyde decomposition speed is, however, below expectation implying there may be precipitates on the formaldehyde decomposition catalyst 10 that are especially hard to remove. Hence, the control system 300 may adjust one or more of the start of the next regeneration stage, the heating temperature for the next regeneration stage, or the heating time for the next regeneration stage.

It is clear to a person skilled in the art that aforementioned examples may be combined. It is further clear to a person skilled in the art that the control system 300 may be configured to acquire further types of air quality information and may process these to decide upon a favorable control of the gas filter system 100. In general, the control system 300 is configured to monitor the formaldehyde concentration in air and to control the gas filter system 100 such that the formaldehyde concentration in air is reduced to acceptable levels or kept at such levels, while minimizing the energy expenditure and the increasing of the ambient temperature.

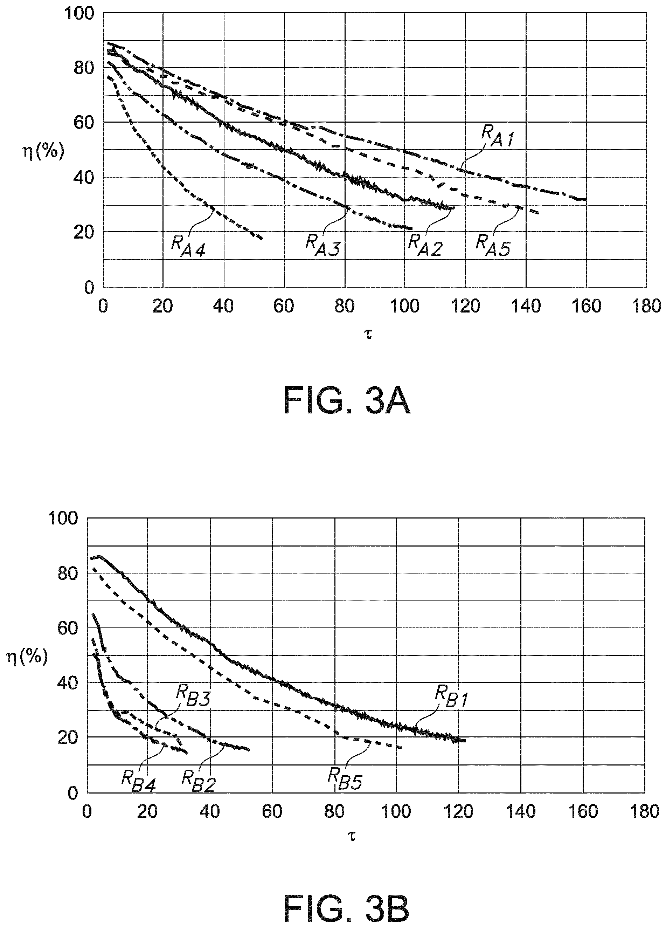

Figs. 3A-E are graphs indicating experimental observations of various experiments involving the gas filter as described herein. Each graph indicates the evolution of the one-pass efficiency $\eta$ over time $\tau$ (in minutes) while in use. The experimental conditions were kept identical for all experiments: (i) an identical (sample) gas filter was used for all experiments, wherein the sample gas filter features a honeycomb structure (see Fig. 1) with square 1 mm-wide air channels separated by 0.2 mm walls. Use of the honeycomb structure is advantageous because it provides a filter structure that only incurs a small pressure drop $\Delta p$. The face area of the sample gas filter is $A_f$ = 25 mm*25 mm = 6.25 cm$^2$ and the thickness of the sample gas filter is L = 20 mm. With an airflow $\Phi$ = 38 L/min through this filter sample we obtain a superficial gas velocity u =$\Phi$ / Af = 1.013 m/s. This superficial velocity u is comparable to the flow speed through a filter in an air cleaner. (ii) Formaldehyde gas was produced by heating paraformaldehyde powder in a glass tube inside an air-purged temperature-controlled oven. (iii) Gas concentrations upstream ($c_{in}$) and downstream ($c_{out}$) of the catalytic gas filter were measured with an IR meter.

The one-pass filtration efficiency $\eta$ is obtained from the measured formaldehyde concentrations $c_{in}$ and $c_{out}$ according to

$$\eta = \left(1 - \frac{c_{out}}{c_{in}}\right) * 100\%$$

The decomposed amount $\Gamma(t)$ follows from

$$\Gamma(t) = \Phi \int_{t=0}^{t} (c_{in} - c_{out}) dt$$

Both $c_{out}$ and $c_{in}$ may vary over the time "t". Results for $\Gamma$ obtained with the (sample) gas filter can be converted to the corresponding $\Gamma$ for a gas filter with a $A_{filter}$ = 0.1 m$^2$ face area by multiplying the former with the factor 0.1/(25*10$^{-3}$)$^2$.

The graph in fig. 3A corresponds to five runs of the same gas filter 200 under a RH of 0%, and a $c_{in}$ of 4 mg/m$^3$. The first run $R_{A1}$ indicates the first use of the gas filter 200. In between the first run $R_{A1}$ and the second run $R_{A2}$ the gas filter 200 was left unused for three days. In between the second run $R_{A2}$ and the third run $R_{A3}$ the gas filter 200 was left unused for two days. In between the third run $R_{A3}$ and the fourth run $R_{A4}$ clean air ($c_{in}$ = 0) was passed through the gas filter 200 for two hours. In between the fourth run $R_{A4}$ and the fifth run $R_{A5}$ the gas filter 200 was heated to a first temperature of 150 °C for a first heating time of 30 minutes. Hence, while not using the gas filter 200 for several days will result in partial regeneration of the one-pass efficiency $\eta$, a substantially

improved regeneration of $\eta$ may be obtained by heating the gas filter 200 to the first temperature for a relatively short amount of time. Specifically, not using the gas filter 200 for several days may result in an initially seemingly well-recovered $\eta$, however, under these conditions $\eta$ may deteriorate relatively quickly while in use; in contrast, the heating of the gas filter 200 to the first temperature for the first heating time results in a further regenerated $\eta$ which deteriorates substantially slower while in use. Hereby, the gas filter 200 may have both an increased active operation time due to decreased downtime (if any), as well as an increased performance during its active operation time due to a higher $\eta$ over time.

The graph in fig. 3B corresponds to a similar set of 5 runs as in fig. 3A with a relative humidity of 50% instead of 0%. The 5 runs in fig. 3B differ from those in fig. 3A in that after the third run $R_{B3}$ clean air was passed through the gas filter 200 for 16 hours rather than for two hours prior to the fourth run $R_{B4}$. It is of interest to determine the gas filter's decomposition capacity $\Gamma$ = CCM. According to the Chinese GB/T 18801/2014 standard, the CCM is reached when $CADR_{CCM}$ - 0.5*$CADR_{\Gamma=0}$ or, equivalently, when $\eta_{CCM}$ = 0.5*$\eta)_{\Gamma=0}$ (at least in the absence of desorption). The $\eta_{CCM}$ is approximately reached at $\eta$=40% during the fourth run $R_{B4}$. The then accumulated CCM= $\Gamma_4$ = 1.25 g from $R_{B1}$ + 0.41 g from $R_{B2}$ + 0.21 g from $R_{B3}$ + 0.04 g from $R_{B4}$ = 1.9 g of formaldehyde. The latter amount qualifies the sample gas filter with an F4 rating, the highest possible rating. Formaldehyde desorption was never observed after allowing the gas filter to wait (equilibrate) for several hours after finishing an adsorption run. Note, that the gas filter thus satisfies the F4 level without regeneration of the gas filter.

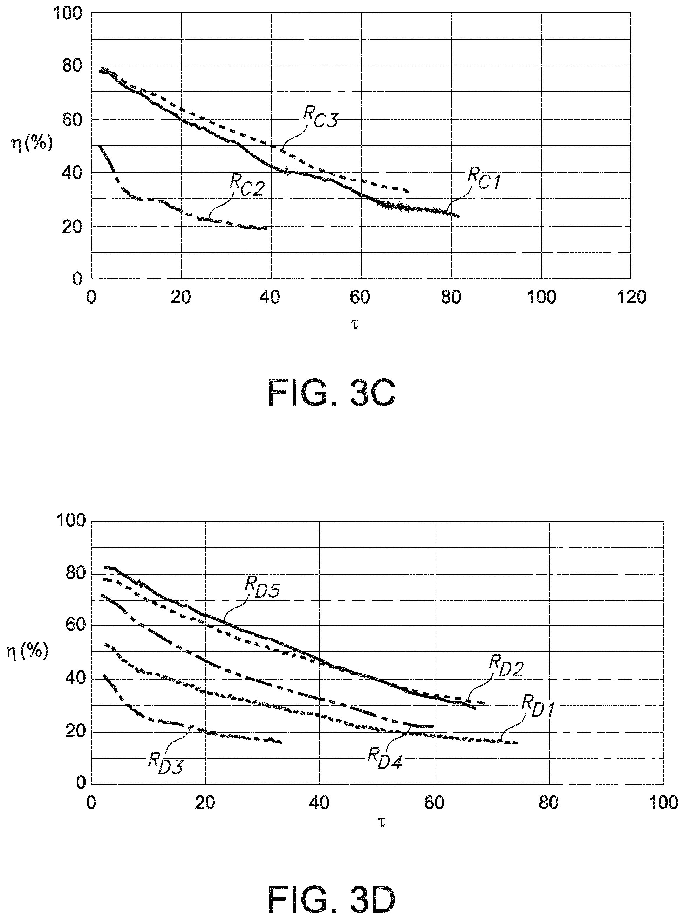

The graph in fig. 3C corresponds to three runs of the same gas filter 200 under a RH of 80%, and a $c_{in}$ of 4 mg/m$^3$. The first run Rci indicates the first use of the gas filter 200. After the first run Rci, the gas filter 200 was left unused for one day prior to the second run $R_{C2}$. After the second run $R_{C2}$ the gas filter 200 was heated to a first temperature of 150 °C for a first heating time of 30 minutes prior to the third run $R_{C3}$.

Figs. 3D-E correspond to experiments wherein the gas filter was deliberately contaminated with smoke tar by slowly passing unfiltered cigarette smoke through the gas filter. The passage of the smoke of one cigarette through a 25x25 mm gas filter corresponds with the passage of the smoke of 160 cigarettes through a full-sized gas filter having a 0.1 m$^2$ face area.

The graph in fig. 3D corresponds to five runs of the same gas filter 200 under a RH of 50%, and a $c_{in}$ of 4.5 mg/m$^3$. Prior to the first run $R_{D1}$ the gas filter was exposed to the smoke of one cigarette. In between the first run $R_{D1}$ and the second run $R_{D2}$ the gas filter 200 was heated at 150 °C for 30 minutes. In between the second run $R_{D2}$ and the third run $R_{D3}$ the gas filter 200 was exposed to the smoke of one cigarette. In between the third run $R_{D3}$ and the fourth run $R_{D4}$ the gas filter 200 was heated at 150 °C for 30 minutes. In between the fourth run $R_{D4}$ and the fifth run $R_{D5}$ the gas filter 200 was heated at 200 °C for 90 minutes.

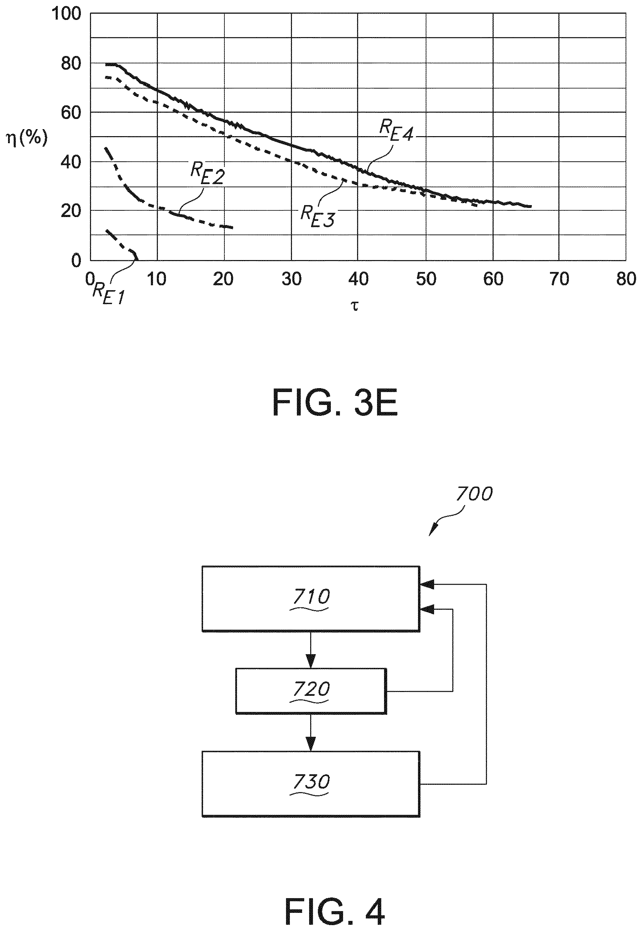

The graph in fig. 3E corresponds to four runs of the same gas filter 200 under a RH of 50% and a $c_{in}$ of 4.3 mg/m³. Prior to the first run $R_{E1}$ the gas filter was exposed to the smoke of eight cigarettes, roughly corresponding to the smoke of 1280 cigarettes through a full-sized gas filter having a 0.1 m² face area. In between the first run $R_{E1}$ and the second run $R_{E2}$ the gas filter 200 was heated at 150 °C for 30 minutes. In between the second run $R_{E2}$ and the third run $R_{E3}$ the gas filter 200 was heated at 200 °C for 30 minutes. In between the third run $R_{E3}$ and the fourth run $R_{E4}$ the gas filter 200 was heated at 230 °C for 40 minutes. Fig. 3E thus clearly conveys a scenario in which an elevated first temperature substantially improves the regeneration of the gas filter. Hence, the control system 300 may select such an elevated first temperature and an increased first heating time for a regeneration stage.

Fig. 4 schematically depicts the process for removing formaldehyde from air 700, wherein the process comprises a decomposition stage 710, a decision stage 720 and a regeneration stage 730. In the decomposition stage 710 air is contacted with a formaldehyde decomposition catalyst, wherein the temperature of the formaldehyde decomposition catalyst is on average at maximum 60 °C. In the decision stage 720 a decision is made to start a decomposition stage or to start a regeneration stage, especially a decision is made dependent on air quality information. In the regeneration stage 730 the temperature of the formaldehyde decomposition catalyst is raised to a first temperature for a first heating time, wherein the first temperature is at least 100 °C and the first heating time is selected from the range of 5-120 minutes. In other embodiments, there is no decision stage and the regeneration stage 730 is started with an interval selected from the range of 5-120 minutes. In yet other embodiments, there is no explicit decision stage and the decomposition stage includes a continuous evaluation on whether or not to start a regeneration stage.

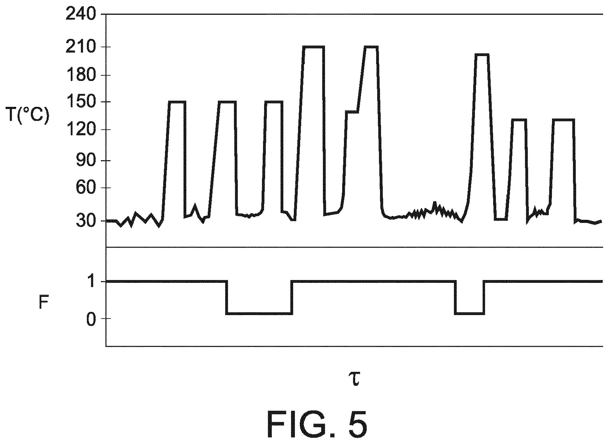

Fig. 5 schematically depicts a potential time profile of both the temperature T of the formaldehyde decomposition catalyst 10 as well as of the operation of the air flow device 600 as controlled by the control system 300. In this embodiment, the control system 300 continuously evaluates the need for regeneration as well as the need for air flow. Hence, over time the control system 300 heats the formaldehyde decomposition catalyst 10 to different regeneration temperatures for varying regeneration heating times. In addition, over time the control system 300 switches the air flow device 600 on (F=1) and off (F=0). In further embodiments, the control system 300 controls a superficial gas velocity of the air flow device, wherein the superficial gas velocity through the gas filter system is controlled in a range from 0 to 2 liter/min.

The term "plurality" refers to two or more.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention also provides a control system that may control the apparatus or device or system, or that may execute the herein described method or process. Yet further, the invention also provides a computer program product, when running on a computer which is functionally coupled to or comprised by the apparatus or device or system, controls one or more controllable elements of such apparatus or device or system.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

**Claims**

1. A gas filter system (100) comprising (i) a formaldehyde decomposition catalyst (10) and a support structure (210) for the formaldehyde decomposition catalyst (10), and (ii) a control system (300) configured to control the temperature of the formaldehyde decomposition catalyst (10), wherein the control system (300) includes an operation mode including: (a) a decomposition stage, wherein the temperature of the formaldehyde decomposition catalyst (10) is on average at maximum 60 °C, and (b) a regeneration stage, wherein the temperature of the formaldehyde decomposition catalyst (10) is temporarily raised to a first temperature during a first heating time, wherein the first temperature is on average at least 100 °C, and wherein the first heating time is selected from the range of 5-120 minutes.

2. The gas filter system (100) according to claim 1, wherein the operation mode includes an alternation of decomposition stages and regeneration stages, with an interval between two consecutive regeneration stages selected from the range of 2-240 hours.

3. The gas filter system (100) according to any one of the preceding claims, wherein the gas filter system (100) is configured to acquire air quality information, and wherein the control system (300) is configured to control one or more of (i) a start of the regeneration stage, (ii) the first heating time, and (iii) the first temperature, dependent on the air quality information.

4. The gas filter system (100) according to claim 3, wherein (a) the gas filter system (100) further comprises a sensor (500) and/or wherein (b) the gas filter system (100) is functionally coupled to a sensor (500), wherein the sensor (500) is configured to retrieve the air quality information.

5. The gas filter system (100) according to any one of the preceding claims 3-4, wherein the air quality information comprises formaldehyde air concentration information, and wherein the control system (300) is configured to control the regeneration stage dependent on the formaldehyde air concentration information.

6. The gas filter system (100) according to any one of the preceding claims 3-5, wherein the air quality information comprises information in relation to one or more air parameters selected from the group of particle concentration, temperature, and humidity, and wherein the control system (300) is configured to control the regeneration stage dependent on the information in relation to the one or more air parameters.

7. The gas filter system (100) according to any one of the preceding claims, wherein the control system (300) comprises a heating element (310), and wherein the heating element (310) is at least partially embedded in the support structure (210).

8. The gas filter system (100) according to any one of the preceding claims, comprising a gas filter apparatus (150) comprising the formaldehyde decomposition catalyst (10) and the support structure (210) for the formaldehyde decomposition catalyst (10), wherein the gas filter system (100) further comprises an air flow device (600) configured to contact air from external of the gas filter apparatus (150) with the formaldehyde decomposition catalyst (10) and to remove air that has been contacted with the formaldehyde decomposition catalyst (10) from the gas filter apparatus (150).

9. The gas filter system (100) according to claim 8, wherein the gas filter system (100) further comprises a downstream sensor (520) configured downstream of the gas filter apparatus (150) and configured to sense air after having been contacted with the formaldehyde decomposition catalyst (10), wherein the downstream sensor (520) is configured to sense a formaldehyde air concentration, and wherein the control system (300) is configured to control the regeneration stage dependent on the sensed formaldehyde air concentration.

10. The gas filter system (100) according to any one of the preceding claims, wherein the gas filter system (100) comprises a gas filter (200) comprising the formaldehyde decomposition catalyst (10) and the support structure (210) for the formaldehyde decomposition catalyst (10), wherein the support structure (210) has a honeycomb shape with a plurality of air channels (220), and wherein the formaldehyde decomposition catalyst (10) is arranged on one or more side walls (221) of one or more air channels (220), wherein the formaldehyde decomposition catalyst (10) comprises nanostructures, wherein the formaldehyde decomposition catalyst (10) comprises cerium oxide, wherein the first temperature is on average at least 150 °C, and wherein the first heating time is selected from the range of 30-90 minutes.

11. A process for removing formaldehyde from air, the process comprising:

>   - executing a decomposition stage, wherein air is contacted with a formaldehyde decomposition catalyst (10), wherein the temperature of the formaldehyde decomposition catalyst (10) is on average at maximum 60 °C;
>   - executing a regeneration stage, wherein the temperature of the formaldehyde decomposition catalyst (10) is temporarily raised to a first temperature during a first heating time, wherein the first temperature is on average at least 100 °C, and wherein the first heating time is selected from the range of 5-120 minutes.

12. The process according to claim 11, wherein the process further comprises alternating decomposition stages and regeneration stages with an interval between two consecutive regeneration stages selected from the range of 2-240 hours.

13. The process according to any one of the preceding claims 11-12, wherein the process further comprises acquiring air quality information, and wherein the process further comprises controlling the regeneration stage dependent on the air quality information, wherein at least one of (i) a start of the regeneration stage, (ii) the first heating time, and (iii) the first temperature is selected dependent on the air quality information.

14. The process according to any one of the preceding claims 11-13, wherein the regeneration phase further comprises:

>   - removing a gas filter (200) comprising the formaldehyde decomposition catalyst (210) from a gas filter system (100) comprising the gas filter (200);
>   - executing the regeneration stage external from the gas filter system (100);
>   - arranging the gas filter (200) after the regeneration stage in the gas filter system (100).

15. The process according to any one of the preceding claims 11-14, wherein the first temperature is on average at least 150 °C, wherein the first heating time is selected from the range of 30-90 minutes, and wherein during the decomposition stage the temperature of the formaldehyde decomposition catalyst (10) is at ambient temperature.

FIG. 1

EP 3 546 056 A1

FIG. 2

16

FIG. 3A

FIG. 3B

FIG. 3C

FIG. 3D

FIG. 3E

FIG. 4

FIG. 5

**Europäisches Patentamt**

**European Patent Office**

**Office européen des brevets**

## EUROPEAN SEARCH REPORT

Application Number

EP 18 16 5296

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/136656 A1 (NARIYUKI AKANE [JP] ET AL) 9 June 2011 (2011-06-09) * paragraphs [0(84] - [0088] * ----- | 1,2,8, 10-12,15 | INV. B01D53/86 |
| X | WO 03/092748 A1 (ADH HEALTH PRODUCTS INC [US]; AFFONSO MIGUEL ALVARO DIAS [DE]; ADVANI) 13 November 2003 (2003-11-13) * pages 13,16,22; claims 1-4,8,25-28; figures 1-5 * ----- | 1-15 | |
| X | WO 2016/102567 A1 (KONINKL PHILIPS NV [NL]) 30 June 2016 (2016-06-30) * page 2, line 4 - line 24 * ----- | 1,2,7,8, 10-12,15 | |

TECHNICAL FIELDS SEARCHED (IPC)

B01D

The present search report has been drawn up for all claims

| Place of search | Date of completion of the search | Examiner |
|---|---|---|
| Munich | 24 September 2018 | Bergt, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 5296

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2018

| Patent document cited in search report | | Publication date | Patent family member(s) | | Publication date |
|---|---|---|---|---|---|
| US 2011136656 | A1 | 09-06-2011 | CN 102099115 A | | 15-06-2011 |
| | | | JP 5486497 B2 | | 07-05-2014 |
| | | | JP WO2010007978 A1 | | 05-01-2012 |
| | | | US 2011136656 A1 | | 09-06-2011 |
| | | | WO 2010007978 A1 | | 21-01-2010 |
| WO 03092748 | A1 | 13-11-2003 | AU 2003247339 A1 | | 17-11-2003 |
| | | | WO 03092748 A1 | | 13-11-2003 |
| WO 2016102567 | A1 | 30-06-2016 | CN 107106979 A | | 29-08-2017 |
| | | | EP 3237024 A1 | | 01-11-2017 |
| | | | JP 2018507007 A | | 15-03-2018 |
| | | | US 2017348454 A1 | | 07-12-2017 |
| | | | WO 2016102567 A1 | | 30-06-2016 |

EPO FORM P0459

For more details about this annex : see Official Journal of the European Patent Office, No. 12/82

**EP 3 546 056 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3929521